Europäisches Patentamt

European Patent Office

Office européen des brevets

(19)

(11) Veröffentlichungsnummer: **0 512 471 A2**

## (12) EUROPÄISCHE PATENTANMELDUNG

(21) Anmeldenummer: **92107553.7**

(22) Anmeldetag: **05.05.92**

(51) Int. Cl.5: **G01C 19/72**

(30) Priorität: **10.05.91 DE 4115166**

(43) Veröffentlichungstag der Anmeldung:
**11.11.92 Patentblatt 92/46**

(84) Benannte Vertragsstaaten:
**DE FR GB IT**

(71) Anmelder: **BODENSEEWERK GERÄTETECHNIK GmbH**
**Alte Nussdorfer Strasse 15, Postfach 101 155**
**W-7770 Überlingen(DE)**

(72) Erfinder: **Bernard, Walter, Dr.**
**Allmendweg 6**
**W-7758 Meersburg(DE)**
Erfinder: **Langner, Klaus**
**Alte Dorfstrasse 61**
**W-7770 Uberlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Faserringresonator.**

(57) Bei einem Faserringresonator, der z.B. in einem auf dem Sagnac-Effekt beruhenden Winkelgeschwindigkeitssensor einsetzbar ist, ist der Faserring als flache Spule (30) ausgebildet, die auf einem flächigen Trägersubstrat (10) angebracht ist. Ein Koppler (16) ist in dem Trägersubstrat (10) integriert. Es wird so ein Faserringresonator geschaffen, welcher die Vorteile integrierter Optik mit der hohen Güte der Faseroptik verbindet.

Fig.1

EP 0 512 471 A2

## Technisches Gebiet

Die Erfindung betrifft einen Faserringresonator enthaltend:

(a) einen Faserring, der als Spule mit mehreren Windungen ausgebildet ist, wobei jede Windung um eine Spulenachse in einer zu der Spulenachse im wesentlichen senkrechten Fläche herumgeführt ist,

(b) ein den Faserring tragendes Trägersubstrat mit einer spulenseitigen Oberfläche und

(c) einen Koppler, der in dem Trägersubstrat angeordnet ist.

## Zugrundeliegender Stand der Technik

Es sind Ringresonatoren bekannt, die in Massivoptik mit Spiegeln aufgebaut sind. Solche Ringresonatoren sind aufwendig. Außerdem erfordern solche Ringresonatoren viel Raum. Die Ringresonatoren haben eine unerwünscht große Masse. Eine weitergehende Miniaturisierung solcher Ringresonatoren hinsichtlich Baugröße und Masse ist praktisch nicht möglich.

Es sind ferner als Faserringe mit lichtleitenden Fasern aufgebaute Ringresonatoren bekannt. Die Faserringe sind auf Faserkörper aufgewickelt. Das Ein- und Auskoppeln von Licht erfolgt durch Faserkoppler, die in Schmelztechnik hergestellt werden. Dabei werden eine erste und eine zweite Faser so miteinander verschmolzen, daß aus der ersten Faser ein bestimmter Prozentsatz des darin geleiteten Lichts in die zweite Faser übergeht oder umgekehrt. Solche Faserkoppler haben vier Faserenden, nämlich zwei Enden der ersten Faser und zwei Enden der zweiten Faser. Solche Faserkoppler sind üblicherweise in Quarzrohren untergebracht. Die Quarzrohre werden separat montiert. Die Quarzrohre sind mit einem Material gefüllt, dessen Brechungsindex an den Brechungsindex der Faser angepaßt, nämlich kleiner als dieser ist. Die Quarzrohre sind von einem Metallmantel umgeben. Der Metallmantel und seine Verklebung dienen als Schutzhülle und Zugentlastung.

Das ist eine aufwendige und große Anordnung, die einer Miniaturisierung im Wege steht.

Eine solche Anordnung ist beispielsweise bekannt durch die US-A-4 678 334.

Bei diesem bekannten Laserkreisel ist ein Faserring auf die Mantelfläche eines monolithischen Gehäuses als zylindrische Spule gewickelt. Das Gehäuse enthält eine Nut in der Mantelfläche, in welcher ein mit dem Faserring verbundener Faserkoppler sitzt. Das Gehäuse enthält einen Laser. Der Faserkoppler enthält optische Fasern, die in einem Bereich von ihrer Ummantelung entkleidet und in einem geschlitzten, zugentlastenden Mantel angeordnet sind. Dort werden die Fasern in einem definierten Abstand gehalten. In den Schlitz dieses Mantels wird ein erhärtendes Material mit geeignetem Brechungsindex eingefüllt. Der so ausgebildete Koppler sitzt seinerseits in einer Nut des Gehäuses.

Es sind in integrierter Optik hergestellte optische Resonatoren bekannt (DE-A-3 615 916). Solche optischen Resonatoren sind klein herstellbar. Dabei ergibt sich aber eine relativ starke Grunddämpfung des Materials. Außerdem ermöglicht der Resonator nur einen einzigen Umlauf um eine von dem Resonator umschlossene Fläche. Größere, spiralförmige Umlauflängen würden Kreuzungen von Wellenleitern bedingen. Solche Kreuzungen wären mit Verlusten behaftet.

Durch die DE-A-3 501 975 ist ein optischer Mehrkanal-Wellenleiterresonator bekannt, der mehrere gedämpft gekoppelte optische Wellenleiterringe aufweist. Ein optische Eingangs- und ein optischer Ausgangswellenleiter sind benachbart zu einem der Wellenleiterringe angeordnet, derart, daß eine gedämpfte Lichtwellenkopplung in diesen Wellenleiterring hinein und aus diesem heraus stattfindet. Die Umfänge der Wellenleiterring und deren jeweiliger Abstand zueinander sind so ausgewählt, daß eine gedämpfte Kopplung zwischen den Wellenleitern stattfindet und daß das Licht in dem Eingangswellenleiter sich mit dem Licht in einem der konzentrischen Wellenleiter verstärkt, um so einen Resoinator mit vergrößertem effektiven Umfang zu bilden. Die konzentrischen Wellenleiter und die Eingangs- und Ausgangswellenleiter sitzen dabei auf einem plattenförmigen Substrat. Es handelt sich dabei um konzentrische, in Radialrichtung miteinander gekoppelte Wellenleiter, nicht um eine Spule mit mehreren in Längsrichtung der Faser aneinander anschließenden Windungen

## Offenbarung der Erfindung

Der Erfindung liegt die Aufgabe zugrunde, einen Faserringresonator hoher Güte mit geringem Aufwand zu schaffen.

Der Erfindung liegt ferner die Aufgabe zugrunde, einen Faserringresonator zu schaffen, der eine Miniaturisierung gestattet.

Erfindungsgemäß wird diese Aufgabe dadurch gelöst, daß

(d) die Spulenachse im wesentlichen senkrecht zu der besagten spulenseitigen Oberfläche liegt,

(e) die Windungen spiralig ineinander angeordnet sind,

(f) in der Oberfläche des Trägersubstrats eine Nut gebildet ist, in dem das eine Faserende der Spule zur Verbindung mit dem anderen Faserende unter der Spule hindurchgeführt ist und.

(g) der Koppler in das Substrat integriert ist.

Der Erfindung liegt ferner die Aufgabe zugrunde, ein Verfahren zur Herstellung eines solchen Faserringresonators zu schaffen.

Dieses Verfahren ist erfindungsgemäß gekennzeichnet durch die Verfahrensschritte:

(a) Herstellen eines Trägersubstrats mit einer planen Oberfläche, welche
- eine erste Vertiefung zur Aufnahme eines optischen Kopplers und
- eine zweite nutförmige Vertiefung zur Aufnahme einer Faser unterhalb der Oberfläche aufweist, wobei diese Vertiefung in einer Ausführungsnut endet,

(b) Herstellen eines optischen Kopplers mit einer Kopplerfaser und einer Resonatorfaser, welche ein kürzeres und ein längeres Faserende aufweist,

(c) Einkleben des Kopplers in die erste Vertiefung,

(d) Einkleben des kürzeren Faserendes auf einem mittleren Abschnitt in die zweite, nutförmige Vertiefung und Einlegen des Endteils des kürzeren Faserendes in die Ausführungsnut,

(e) Andrücken des Trägersubstrats mit der besagten Oberfläche gegen die Stirnfläche eines Wickelkörpers, dessen Höhe geringfügig größer als der Durchmesser der Resonatorfaser ist,

(f) Wickeln der Spule aus dem längeren Faserende durch Drehen des Substrats, wobei das Ende des längeren Faserendes auf dem äußeren Umfang der Flachspule liegt,

(g) Herausnehmen des Endteils des kürzeren Faserendes aus der Ausführungsnut und optisches Verbinden der Enden des längeren und des kürzeren Faserendes miteinander,

(h) Befestigen der Spule auf der Oberfläche und

(i) Entfernen des Wickelkörpers.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

Fig. 1 ist eine Draufsicht auf einen Faserringresonator mit Koppler, wobei eine Spule auf einem Substrat sitzt, in welches der Koppler eingelassen ist.

Fig.2 zeigt einen Schnitt längs der Linie A-B von Fig.1.

Fig.3 zeigt Einzelheiten von Fig.2.

## Bevorzugte Ausführung der Erfindung

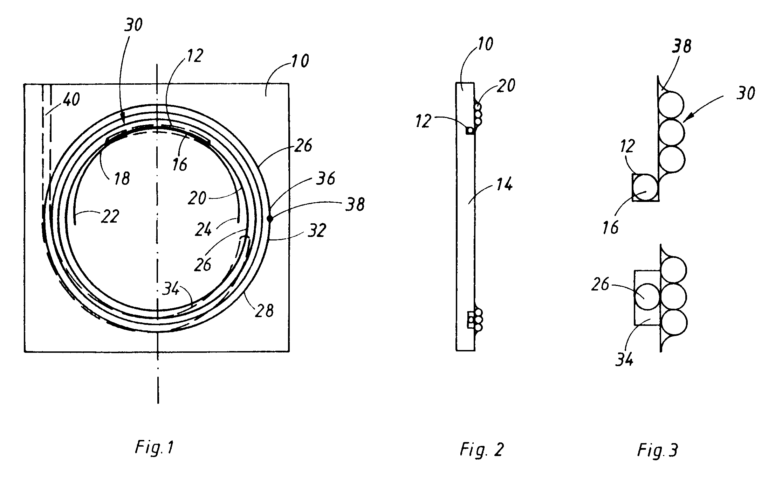

In Fig. 1 und 2 ist mit 10 ein Trägersubstrat in Form einer rechteckigen Platte bezeichnet. Das Trägersubstrat 10 weist eine bogenförmige Vertiefung 12 in seiner Oberfläche 14 auf. In dieser Vertiefung 12 sitzt ein als "Schmelzkoppler" ausgebildeter optischer Koppler 16. Solche optischen Koppler sind an sich bekannt. Der Koppler 16 ist daher nicht im einzelnen beschrieben. Der Koppler 16 stellt eine optische Kopplung zwischen einer Kopplerfaser 18 und einer Resonatorfaser 20 her. Diese beiden Fasern sind in einem mittleren Bereich so miteinander verschmolzen, daß ein definierter Anteil des in der Resonatorfaser 20 geleiteten Lichtes in die Kopplerfaser übertritt oder umgekehrt. Durch Wahl der Krümmung der Vertiefung 12 eine Abstimmung des Kopplers 16 hinsichtlich seiner Wellenlängenabhängigkeit erfolgen.

Der Koppler bildet vier Faserenden: Zwei Faserenden 22 und 24 gehören zu der Kopplerfaser 18. Diese Faserenden 22 und 24 bilden die Ein- und Ausgänge des Faserringresonators. Zwei weitere Faserenden 26 und 28 gehören zu der Resonatorfaser 20. Von den Faserenden 26 und 28 ist das Faserende 26 ein kürzeres Faserende. Das Faserende 28 ist ein längeres Faserende, das im wesentlichen die Spule 30 des Faserringresonators bildet.

Der Koppler 16 liegt im Bereich des inneren Umfanges der Spule 30. Das Ende 32 des längeren Faserendes 28 liegt auf dem Umfang der Spule 30. Das kürzere Faserende 26 ist ausgehend von dem Koppler 16 in einer bogenförmigen Nut 34 unter der Spule 30 her zu deren Außenseite geführt und um den äußeren Umfang der Flachspule 30 herumgelegt. Das Ende 36 des kürzeren Faserendes 26 ist bei 38 mit dem Ende 32 des längeren Faserendes 28 optisch verbunden. Die Stirnflächen der Enden 32 und 34 sind aufeinandergesetzt und verklebt oder verschweißt.

Der Koppler 16 ist in der Vertiefung 12 in ein weichelastisches Material, z.B. ein Gel, eingebettet, dessen Brechungsindex an den Brechungsindex der Fasern angepaßt, nämlich kleiner als dieser ist.

In Fig.3 sind der Koppler und das kürzere Faserende 26 vergrößert dargestellt. Der Koppler 16 liegt in der Draufsicht im Verlauf der Fasern 22,24 bzw. 26,28, die im Bereich des Kopplers 16 praktisch zusammenfallen. Der Koppler 16 ist jedoch, wie aus Fig.2 und 3 ersichtlich ist, gegenüber der Oberfläche 14 zurückgesetzt und in dem Trägersubstrat 10 eingebettet. Die Spule 30 ist durch Kleber 38 mit der Oberfläche 14 des Trägersubstrats 10 verbunden.

Der beschriebene Faserringresonator wird auf folgende Weise hergestellt:

Zunächst wird das Trägersubstrat 10 hergestellt. Das Trägersubstrat ist eine rechteckige, insbesondere quadratische Platte. Das Trägersubstrat 10 weist die Vertiefung 12 und die bogenförmige Nut 34 auf. An die Nut 34 schließt sich eine Ausführungsnut 40 an, die geradlinig zum Rand des Trägersubstrats geführt ist.

Der Koppler 16 wird hergestellt. Der Koppler 16 weist die vier Faserenden 22, 24 und 26, 28 auf. Der Koppler 16 wird in die Vertiefung 12 eingesetzt, positioniert und durch Verkleben der Enden zugentlastet.

Ein zylindrischer Wickelkörper wird auf die Oberfläche 14 des Trägersubstrats 10 aufgesetzt und an diese Oberfläche 14 angedrückt. Der Wickelkörper ist dabei ein Ring mit einer Höhe oder axialen Abmessung, die etwas größer ist als der Durchmesser der Faser. Der Wickelkörper wird so aufgesetzt, daß die Faserenden 22, 24 der Kopplerfaser im Inneren des Wickelkörpers liegen. Das kürzere Faserende 26 der Resonatorfaser wird um den Wickelkörper im Uhrzeigersinn in Fig.1 herum und in die bogenförmige Nut 34 eingelegt und dort eingeklebt. Durch die Nut 34 wird das kürzere Faserende 26 dann in die Ausführungsnut 40 geführt und schließlich oben in Fig.1 nach außen herausgeführt.

Durch Drehen des Trägersubstrats wird dann das längere Faserende 28 um den Wickelkörper herum zu der Spule 30 gewickelt. Die Spule hat hier vorzugsweise nur eine Lage. Die Spule könnte aber auch in mehreren, in axialer Richtung übereinanderliegenden Lagen gewickelt werden. Dieser Wickelvorgang wird durch das kreuzende, kürzere Faserende 26 nicht beeinträchtigt, da dieses Faserende 26 durch die Nut 34 tiefgelegt ist.

Die Spule 30 wird durch Kleber vorläufig fixiert. Das geschieht durch UV-Kleben. Der Kleber wird durch radiale Schlitze im Wickelkörper aufgebracht, in deren Bereich die Faser durch die Schlitze hindurch zugänglich ist.

Das kürzere Faserende 26 wird dann aus der Ausführungsnut 40 herausgezogen und außen um den Umfang der Spule 30 herumgelegt. Dann liegt die Stirnfläche des kürzeren Faserendes 26 am Ende 36 der Stirnfläche des längeren Faserendes 28 am Ende 32 gegenüber. Die beiden Stirnflächen werden durch Schweißen oder Kleben miteinander so verbunden, daß ein in sich geschlossener optischer Weg mit geringer Dämpfung entsteht. Der durch die Verbindung der beiden Faserenden 26 und 28 entstehende zusätzliche Ring wird ebenfalls mit dem Trägersubstrat 10 verklebt. Der zusätzliche Ring kann aber im Bedarfsfall auch auf einen flachen Piezomodulatorkern gewickelt werden.

Schließlich wird die Spule 30 dauerhaft mit dem Trägersubstrat 10 verbunden. Das geschieht bei dem dargestellten Ausführungsbeispiel durch den Kleber 38. Der Wickelkörper kann dann entfernt werden.

Die Vertiefung 12 wird mit dem weichelastischen und hinsichtlich des Brechungsindex angepaßten Material vergossen.

Das Trägersubstrat 10 kann eine Platte aus Quarzglas oder aus Aluminiumoxidkeramik sein.

Die Vertiefung 12 und die Nut 34 sowie die Ausführungsnut 40 können durch Sägen, Fräsen oder Ätzen hergestellt sein. Die Positionen für die Frässchnitte werden dann auf dem Trägersubstrat 10 so festgelegt, daß möglichst große Krümmungsradien möglich sind. Es ist aber auch möglich, das Trägersubstrat 10 mitsamt den Vertiefungen und Nuten aus Porzellan oder Formkeramik herzustellen.

Statt durch Verkleben kann die Befestigung der Spule 30 auf der Oberfläche 14 des Trägersubstrats 10 auch durch andere Techniken wie Schweißen, Sintern oder Löten erfolgen.

In ähnlicher Weise wie der Koppler 16 können auch weitere Koppler in Vertiefungen des Trägersubstrats 10 angeordnet und mit Fasern verbunden werden. In das Trägersubstrat 10 können weitere optoelektronische Komponenten wie Sender und Empfänger eingebettet sein. Das Trägersubstrat 10 kann auch elektronische Bauteile aufnehmen.

Die Reihenfolge der Schritte des beschriebenen Verfahrens kann je nach Bedarf variiert werden.

Der beschriebene Faserringresonator verbindet die planare Bauweise der integrierten Optik mit der hohen Güte der Glasfasertechnik. Die Koppler sind durch die Integration in das Trägersubstrat mechanisch und optisch stabiler als bei der oben geschilderten bekannten Anordnung. Alle Faserstränge sind auf engstem Raum untergebracht und vollständig mechanisch fixiert. Die gesamte Faser ist praktisch ein mechanischer Bestandteil des Substrats. Das Trägersubstrat ist einerseits Träger für die Spule 30 und gleichzeitig Schutzmantel und Gehäuse für die Koppler sowie Träger für andere (nicht dargestellte) Komponenten.

Auf einer quadratischen Substratfläche von etwa 70 mm Kantenlänge sind Faserlängen von einigen 10 Millimetern bis 30 Metern unterzubringen. Die freien Spektralabstände sind also frei wählbar zwischen etwa 2 GHz und 6 MHz.

Die Faserdämpfung liegt bei einer typischen Monomodefaser und einer Wellenlänge des Erregungslichtes von 830 nm bei weiger als 1 dB/km. Das bedeutet für den Resonator geringe Verluste und damit hohe Finessen. Werden die Verluste am Koppler 16 klein gehalten, sind Finessen von weit über 100 auch mit großer Faserlänge möglich.

Die Gesamthöhe des so ausgebildeten Faserringresonator-Moduls kann kleiner als 3 Millimeter gemacht werden, wenn geringe Anforderungen an die Beschleunigungsfestigkeit gestellt werden. Der Ausdehnungskoeffizient des Trägersubstrats kann an den Ausdehnungskoeffizienten der Faser angepaßt werden. Dadurch arbeitet der Faserringresonator weitgehend ohne störende Temperatureffekte.

Die Halbleitersender sowie Detektoren und Modulatoren können in Miniaturbauweise auf oder in dem Trägersubstrat 10 untergebracht sein.

Der beschriebene Faserringresonator kann als faseroptischer Sensor zur Messung von Drehgeschwindigkeiten unter Ausnutzung des Sagnac-Effektes benutzt werden. Der Faserringresonator kann auch als Sensor für Schall dienen. Der Fasereringresonator kann weiterhin in bekannter Weise als Sensor ausgebildet sein, der auf den Faraday-Effekt, den Kerr-Effekt oder den Brillouin-Effekt anspricht. Schließlich ist ein weiterer Einsatzbereich des beschriebenen Faserringresonators die Frequenz- und Modenkontrolle an Halbleiterlasern. Die geringen Abmessungen der beschriebenen Anordnung ermöglichen eine Kombination von Lasersender und miniaturisiertem Online-Spektrometer. Das kann bei der Breitbandübertragung anwendbar sein.

Die Oberfläche des Trägersubstrats kann in einer Richtung gekrümmt, z.B. zylindrisch sein. Es ist dann möglich, einen Sensor mit dem Faserringresonator an gekrümmte Strukturen anzupassen. Beispielsweise kann der Sensor auf der Innenfläche eines zylindrischen Gehäuses eines Flugkörpers angeordnet werden.

Das Trägersubstrat kann auch aus Quarz oder Glaskeramik bestehen.

**Patentansprüche**

1. Faserringresonator enthaltend:
   (a) einen Faserring, der als Spule mit mehreren Windungen ausgebildet ist, wobei jede Windung um eine Spulenachse in einer zu der Spulenachse im wesentlichen senkrechten Fläche herumgeführt ist,
   (b) ein den Faserring tragendes Trägersubstrat mit einer spulenseitigen Oberfläche und
   (c) einen Koppler, der in dem Trägersubstrat angeordnet ist,
   **dadurch gekennzeichnet, daß**
   (d) die Spulenachse im wesentlichen senkrecht zu der besagten spulenseitigen Oberfläche liegt,
   (e) die Windungen spiralig ineinander angeordnet sind,
   (f) in der Oberfläche (14) des Trägersubstrats (10) eine Nut (34) gebildet ist, in dem das eine Faserende (26) der Spule (30) zur Verbindung mit dem anderen Faserende (28) unter der Spule (30) hindurchgeführt ist und
   (g) der Koppler in das Trägersubstrat integriert ist.

2. Faserringresonator nach Anspruch 1, **dadurch gekennzeichnet, daß** der Koppler (16) in einer Vertiefung (12) des Trägersubstrats (10) angeordnet ist.

3. Faserringresonator nach Anspruch 1 oder 2, **dadurch gekennzeichnet, daß** die Spule (30) auf die Oberfläche (14) des Trägersubstrats (10) aufgeklebt ist.

4. Faserringresonator nach Anspruch 1 oder 2, **dadurch gekennzeichnet, daß** die Spule auf die Oberfläche des Trägersubstrats aufgelötet ist.

5. Faserringresonator nach Anspruch 1 oder 2, **dadurch gekennzeichnet, daß** die Spule mit der Oberfläche des Trägersubstrats verschweißt ist.

6. Faserringresonator nach Anspruch 1 oder 2, **dadurch gekennzeichnet, daß** die Spule mit der Oberfläche des Trägersubstrats versintert ist.

7. Faserringresonator nach einem der Ansprüche 1 bis 6, **dadurch gekennzeichnet, daß** das Trägersubstrat (10) mit den Vertiefungen (12,34,40) aus Formkeramik besteht.

8. Faserringresonator nach einem der Ansprüche 1 bis 6, **dadurch gekennzeichnet, daß** das Trägersubstrat mit den Vertiefungen aus Porzellan besteht.

9. Faserringresonator nach einem der Ansprüche 1 bis 8, **dadurch gekennzeichnet, daß** in Vertiefungen des Trägersubstrats weitere Koppler untergebracht sind.

10. Faserringresonator nach einem der Ansprüche 1 bis 9, **dadurch gekennzeichnet, daß** an dem Substrat optische Sender und Empfänger vorgesehen sind.

11. Faserringresonator nach einem der Ansprüche 1 bis 10, **dadurch gekennzeichnet, daß** elektronische Bauteile auf oder in dem Substrat vorgesehen sind.

12. Faserringresonator nach einem der Ansprüche 1 bis 11, **dadurchgekennzeichnet, daß** das Trägersubstrat eine in einer Ebene gekrümmte Oberfläche aufweist, welche die Spule trägt.

13. Verfahren zur Herstellung eines Faserringresonators nach Anspruch 1, **gekennzeichnet durch die Verfahrensschritte:**
    (a) Herstellen eines Trägersubstrats (10) mit einer planen Oberfläche (14), welche

- eine Vertiefung (12) zur Aufnahme eines optischen Kopplers (16) und
- eine Nut (34) zur Aufnahme einer Faser unterhalb der Oberfläche (14) aufweist, wobei diese Nut (34)in einer Ausführungsnut (40) endet,

(b) Herstellen eines optischen Kopplers (16) mit einer Kopplerfaser und einer Resonatorfaser, welche ein kürzeres und ein längeres Faserende (26,28) aufweist,

(c) Einkleben des Kopplers (16) in die Vertiefung (12),

(d) Einkleben des kürzeren Faserendes (26) auf einem mittleren Abschnitt in die Nut (34) und Einlegen des Endteils des kürzeren Faserendes (26) in die Ausführungsnut (40),

(e) Andrücken des Trägersubstrats (10) mit der besagten Oberfläche (14) gegen die Stirnfläche eines Wickelkörpers, dessen Höhe geringfügig größer als der Durchmesser der Resonatorfaser ist,

(f) Wickeln der Spule (30) aus dem längeren Faserende (28) durch Drehen des Trägersubstrats (10), wobei das Ende (32) des längeren Faserendes (28) auf dem äußeren Umfang der Spule (30) liegt,

(g) Herausnehmen des Endteils des kürzeren Faserendes (26) aus der Ausführungsnut (40) und optisches Verbinden der Enden (32,36) des längeren und des kürzeren Faserendes (28,26)miteinander,

(h) Befestigen der Spule (30) auf der Oberfläche (14) und

(i) Entfernen des Wickelkörpers.

14. Faserringresonator nach einem der Ansprüche 1 bis 6, **dadurch gekennzeichnet, dass** das Trägersubstrat (10) mit den Vertiefungen (12, 34, 40) aus Quarz besteht.

15. Faserringresonator nach einem der Ansprüche 1 bis 6, **dadurch gekennzeichnet, dass** das Trägersubstrat (10) mit den Vertiefungen (12, 34, 40) aus Glaskeramik besteht.

Fig.1

Fig. 2

Fig. 3

EP 0 512 471 A2